# EUROPÄISCHE PATENTSCHRIFT

(11) **EP 0 756 618 B1**
(45) Veröffentlichungstag und Bekanntmachung des Hinweises auf die Patenterteilung: **12.08.1998**
(21) Anmeldenummer: 95914342.1
(22) Anmeldetag: 06.04.1995
(51) Int. Cl.: C11D 3/37, C08F 8/28, C08G 12/00, C08G 12/06

(54) **FARBSTOFFÜBERTRAGUNGSINHIBITOREN FÜR WASCHMITTEL**
DYE-TRANSFER INHIBITORS FOR DETERGENTS
INHIBITEURS DE TRANSFERT DE COLORANTS POUR DETERGENTS

(30) Priorität: 20.04.1994 DE 4413720
(43) Veröffentlichungstag der Anmeldung: 05.02.1997
(73) Patentinhaber: BASF AKTIENGESELLSCHAFT, 67056 Ludwigshafen (DE)
(72) Erfinder: ZIRNSTEIN, Michael, D-69198 Schriesheim (DE); TRIESELT, Wolfgang, D-67063 Ludwigshafen (DE); OPPENLÄNDER, Knut, D-67061 Ludwigshafen (DE); NILZ, Claudia, D-67127 Rödersheim-Gronau (DE); KRÖNER, Michael, D-68309 Mannheim (DE); GÜNTHER, Wolfgang, D-67582 Mettenheim (DE)
(86) Internationale Anmeldenummer: EP9501251
(87) Internationale Veröffentlichungsnummer: WO9529221

(56) Entgegenhaltungen:
- EP-A- 0 545 383
- DE-A- 4 305 299
- US-A- 5 134 176

## Beschreibung

Die Erfindung betrifft die Verwendung von Polymerisaten als Zusatz zu Waschmitteln zur Inhibierung der Farbstoffübertragung während des Waschvorgangs, Aminal-, Halbaminal- und/oder Aminal-Acetal-Strukturen enthaltende Polymerisate sowie Waschmittel, die diese Polymerisate enthalten.

Aus der DE-B-22 32 353 sind Wasch- und Reinigungsmittelmischungen bekannt, die im wesentlichen aus 95 bis 60 Gew.-% nichtionischen Detergentien und 5 bis 40 Gew.-% eines teilweise oder vollständig wasserlöslichen Polyvinylpyrrolidons bestehen und im wesentlichen von anionischen oberflächenaktiven Mitteln frei sind. Die Polymerisate des Vinylpyrrolidons verhindern beim Waschvorgang den Farbstoffübergang von gefärbten auf weiße Textilien. Die Polymerisate des Vinylpyrrolidons haben Molekulargewichte in dem Bereich von etwa 10 000 bis etwa 1 000 000. Es kommen sowohl Homopolymerisate als auch Copolymerisate des Vinylpyrrolidons in Betracht. Als geeignete Comonomere werden Acrylnitril oder Maleinsäureanhydrid genannt. Die Wirksamkeit der Vinylpyrrolidonpolymerisate als Farbstoffübertragungsinhibitor wird jedoch von anionischen Tensiden stark beeinträchtigt.

Aus der DE-A-28 14 287 sind Wasch- und Reinigungsmittel bekannt, die anionische und/oder nichtionische Tenside, Gerüstsubstanzen und sonstige übliche Waschmittelzusätze sowie als verfärbungsinhibierende Additive 0,1 bis 10 Gew.-% an wasserlöslichen bzw. wasserdispergierbaren Homo- bzw. Copolymerisaten des N-Vinylimidazols enthalten. Diese Polymeren besitzen gegenüber einer Anzahl von Ausfärbungen nur eine unzureichende Wirksamkeit.

Aus der EP-A-0 461 399 und der EP-A-0 552 702 sind Aminal- und Acetal-Aminal-Gruppen enthaltene Polymerisate bekannt, die durch Umsetzung von Polyvinylaminen oder Copolymerisaten, die Vinylamin- und Vinylalkohol-Einheiten enthalten, mit Aldehyden hergestellt werden. Diese Polymerisate werden als Flockungsmittel oder als Retentionsmittel bei der Herstellung von Papier verwendet.

Aus der JP-A-61/051006 sind teilchenförmige vernetzte Polyvinylamine bekannt, die durch Reaktion von Polyvinylaminen mit Vernetzern, wie Alkylendihalogeniden, Epichlorhydrin oder Dialdehyden hergestellt werden. Die vernetzten Polyvinylamine werden als Ionenaustauscher verwendet.

Der vorliegenden Erfindung liegt die Aufgabe zugrunde, einen Zusatz für Waschmittel zur Verfügung zu stellen, der gegenüber bekannten Farbstoffübertragungsinhibitoren eine verbesserte Wirksamkeit hat. Eine weitere Aufgabe besteht darin, neue Stoffe zur Verfügung zu stellen.

Die zuerst beschriebene Aufgabe wird gelöst mit der Verwendung von Polymerisaten, die durch Umsetzung von
(a) Vinylamineinheiten enthaltenden Polymerisaten mit
(b) Aldehyd- oder Ketogruppen aufweisenden Verbindungen und gegebenenfalls
(c) anderen NH-Gruppen und/oder OH-Gruppen aufweisenden Verbindungen
herstellbar sind und die Aminal-, Halbaminal- und/oder Aminal-Acetal-Strukturen sowie gegebenenfalls unumgesetzte Vinylamineinheiten enthalten, als Zusatz zu Waschmitteln zur Inhibierung der Farbstoffübertragung während des Waschvorgangs.

Die andere Aufgabe wird gelöst mit Aminal-, Halbaminal- und/oder Aminal-Acetal-Strukturen enthalten Polymerisaten, die erhältlich sind durch Umsetzung von
(a) Vinylamineinheiten enthaltenden Polymerisaten mit
(b) Aldehyd- oder Ketogruppen aufweisenden Verbindungen und
(c) anderen NH-Gruppen aufweisenden Verbindungen.

Gegenstand der Erfindung sind außerdem Waschmittel auf der Basis von Tensiden und gegebenenfalls Buildern sowie anderen üblichen Bestandteilen, die 0,05 bis 10 Gew.-% an Polymerisaten enthalten, die durch Umsetzung von
(a) Vinylamineinheiten enthaltenden Polymerisaten mit
(b) Aldehyd- oder Ketogruppen aufweisenden Verbindungen und gegebenenfalls
(c) anderen NH-Gruppen und/oder OH-Gruppen aufweisenden Verbindungen
herstellbar sind und die Aminal-, Halbaminal- und/oder Aminal-Acetal-Strukturen sowie gegebenenfalls unumgesetzte Vinylamineinheiten enthalten.

Die erfindungsgemäß als Farbstoffübertragungsinhibitoren in Waschmitteln zu verwendenden Polymerisate sind zumindest teilweise aus dem Stand der Technik bekannt, vgl. die oben genannten EP-A-0 461 399, EP-A-0 552702 und JP-A-61/051006. Sie werden ausgehend von Vinylamineinheiten enthaltenden Polymerisaten hergestellt. Bei diesen Polymerisaten kann es sich entweder um Homopolymerisate oder um Copolymerisate handeln. Die Vinylamineinheiten enthalten Polymerisate werden üblicherweise durch Polymerisieren von offenkettigen N-Vinylcarbonsäureamiden der Formel I 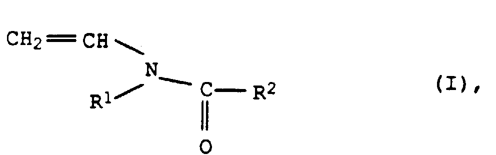 in der R¹, R² = H oder C₁- bis C₆-Alkyl bedeutet, und anschließende partielle oder vollständige Abspaltung der Gruppe 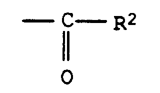 durch Erhitzen mit Säuren oder Basen hergestellt. Bei einer partiellen Abspaltung der Gruppen 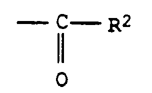 aus den Polymerisaten erhält man Vinylamineinheiten aufweisende Polymerisate (a) mit statistisch verteilten Einheiten der Struktur 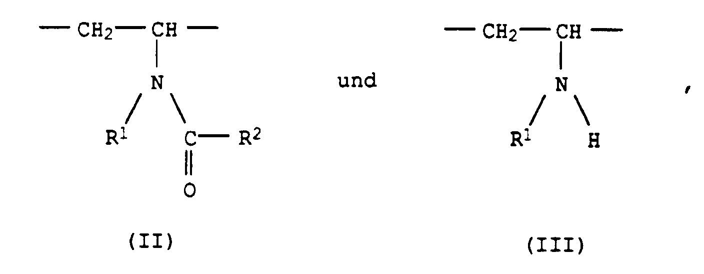 wobei die Substituenten R¹ und R² gleich oder verschieden sein können und H oder C₁- bis C₆-Alkyl bedeuten. R¹ und R² stehen vorzugsweise für H, d.h. als offenkettiges N-Vinylcarbonsäureamid wird vorzugsweise N-Vinylformamid eingesetzt. Solche Polymerisate 5 sind beispielsweise aus der EP-B-0 071 050 bekannt.

Der Gehalt an Einheiten III in den Polymerisaten beträgt 0,1 bis 100 Mol-%.

Außer den hydrolysierten Homopolymerisaten von Verbindungen der Formel I kommen als Komponente (a) hydrolysierte Copolymerisate aus Amiden der Formel I und anderen monoethylenisch ungesättigten Monomeren in Betracht. Solche Polymerisate enthalten
5 (1) 0,1 bis 100 Mol-% Vinylamineinheiten und
(2) 99,9 bis 0 Mol-% Einheiten von anderen monoethylenisch ungesättigten Monomeren und
(3) 0 bis 5 Mol-% Einheiten von Monomeren mit mindestens zwei ethylenisch ungesättigten nicht konjugierten Doppelbindungen.

Geeignete Copolymerisate (a) enthalten beispielsweise als andere monoethylenisch ungesättigte Monomere Vinylester gesättigter Carbonsäuren mit 1 bis 6 Kohlenstoffatomen, z.B. Vinylacetat, Vinylpropionat und Vinylbutyrat, monoethylenisch ungesättigte C₃- bis C₈-Carbonsäuren, wie Acrylsäure, Methacrylsäure, Dimethylacrylsäure, Ethacrylsäure, Crotonsäure, Vinylessigsäure, Allylessigsäure, Maleinsäure, Fumarsäure, Citraconsäure und Itaconsäure sowie deren Ester, Anhydride, Amide und Nitrile. Bevorzugt eingesetzte Anhydride sind beispielsweise Maleinsäureanhydrid, Citraconsäureanhydrid und Itaconsäureanhydrid. Geeignete Ester leiten sich beispielsweise von Alkoholen mit 1 bis 6 C-Atomen ab, wie Methylacrylat, Methylmethacrylat, Ethylacrylat, Ethylmethacrylat, Isobutylacrylat, Hexylacrylat oder von Glykolen oder Polyalkylenglykolen, wobei jeweils nur eine OH-Gruppe der Glykole oder Polyglykole mit einer monoethylenisch ungesättigten Carbonsäure verestert ist, z.B. Hydroxyethylacrylat, Hydroxyethylmethacrylat, Hydroxypropylacrylat, Hydroxypropylmethacrylat, Hydroxybutylacrylat, Hydroybutylmethacrylat sowie Acrylsäuremonoester von Polyalkylenglykolen eines Molekulargewichts bis zu 10.000, vorzugsweise 1.500 bis 9.000. Außerdem eignen sich Ester der genannten Carbonsäuren mit Aminoalkoholen, z.B. Dimethylaminoethylacrylat, Dimethylaminoethylmethacrylat, Diethylaminoethylacrylat, Diethylaminoethylmethacrylat, Dimethylaminopropylacrylat und Dimethylaminopropylmethacrylat. Geeignete Amide sind beispielsweise Acrylamid, Methacrylamid sowie N-Alkyl- und N-Dialkylamide mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert.-Butylacrylamid sowie basische Amide wie Dimethylaminoethylacrylamid, Dimethylaminoethylmethacrylamid, Diethylaminoethylmethacrylamid, Diethylaminoethylacrylamid, Dimethylaminopropylacrylamid, Diethylaminopropylacrylamid, Diethylaminopropylmethacrylamid und Dimethylaminopropylmethacrylamid. Die basischen Acrylate und Acrylamide können in Form der freien Basen, der Salze mit Mineralsäuren oder Carbonsäuren oder auch in quaternierter Form eingesetzt werden. Außerdem eignen sich als Comonomere Acrylnitril, Methacrylnitril, N-Vinylpyrrolidon, N-Vinylcaprolactam, N-Vinylimidazol sowie substituierte N-Imidazole wie N-Vinyl-2-methylimidazol und N-Vinyl-2-ethylimidazol und N-Vinylimidazolin und substituierte N-Vinylimidazoline, z.B. N-Vinyl-2-methylimidazolin. Außer den genannten Monomeren können auch Sulfogruppen enthaltende Monomere wie beispielsweise Vinylsulfonsäure, Allylsulfonsäure, Styrolsulfonsäure und Acrylsäure-3-sulfopropylester als andere monoethylenisch ungesättigte Monomere eingesetzt werden. Die Vinylamineinheiten enthaltenden Polymerisate (a) enthalten vorzugsweise
(1) 1 bis 99 Mol-% Vinylamineinheiten und
(2) 99 bis 1 Mol-% Einheiten von Monomeren aus der Gruppe von offenkettigen N-Vinylcarbonsäureamiden, Vinylformiat, Vinylacetat, Vinylpropionat, C₁- bis C₆-Alkylvinylether, Vinylharnstoffen, Acrylsäure, Methacrylsäure, Maleinsäure sowie die Anhydride, Ester, Nitrile und Amide der genannten Carbonsäuren, N-Vinylpyrrolidon, N-Vinylimidazole, N-Vinylimidazoline und/oder Vinylalkoholeinheiten.

Solche hydrolysierten Copolymerisate sind beispielsweise bekannt aus EP-B-0 216 387, EP-B-0 251 182 und EP-A-0 582 409. Die bevorzugt eingesetzten Vinylamineinheiten enthaltenden Polymerisate (a) enthalten
(1) 0,1 bis 100 Mol-% Vinylamineinheiten und
(2) 99,9 bis 0 Mol-% N-Vinylformamid-, Vinylformiat-, Vinylacetat- und/oder Vinylalkoholeinheiten.

Sie sind erhältlich durch Homopolymerisation von Verbindungen der Formel I und anschließende vollständige Abspaltung der Gruppe ―CO―R² oder durch Copolymerisation von N-Vinylformamid und Vinylacetat und anschließende partielle oder vollständige Abspaltung von Formylgruppen aus dem Polymerisat und teilweise oder vollständige Hydrolyse der einpolymerisierten, Vinylformiat- oder Vinylacetat-Gruppen, wobei Vinylalkoholeinheiten resultieren.

Die Vinylamineinheiten enthaltenden Polymerisate (a) können noch dahingehend modifiziert werden, daß man bei der Copolymerisation Monomermischungen einsetzt, die bis zu 5 Mol-% eines mindestens zwei ethylenisch ungesättigte nichtkonjugierte Doppelbindungen im Molekül aufweisenden Monomeren enthalten. Es entstehen dann vernetzte Copolymerisate, die bis zu 5 Mol %-Einheiten von Monomeren mit mindestens zwei ethylenisch ungesättigten nichtkonjugierten Doppelbindungen im Molekül enthalten. Falls Vernetzer bei der Copolymerisation eingesetzt werden, beträgt die bevorzugt verwendete Menge 0,05 bis 2 Mol-%. Die Mitverwendung der Monomeren (3) bewirkt eine Mol-Gewichtserhöhung der Copolymerisate. Geeignete Verbindungen dieser Art sind beispielsweise Methylen-bis-acrylamid, Ester von Acrylsäure oder Methacrylsäure mit mehrwertigen Alkoholen, z.B. Glykoldimethacrylat oder Glycerintrimethacrylat sowie mindestens zweifach mit Acrylsäure oder Methacrylsäure veresterte Polyole, wie Pentaerythrit und Glucose. Geeignete Vernetzer sind außerdem Divinylethylenharnstoff, Divinylbenzol, Divinyldioxan, Pentaerythrittriallylether und Pentaallylsuccrose. Vorzugsweise verwendet man aus dieser Gruppe von Verbindungen wasserlösliche Monomere, beispielsweise Glykoldiacrylat oder Glykoldiacrylate oder Glykoldimethacrylate von Polyethylenglykolen eines Molekulargewichts bis zu 3.000.

Die Copolymerisate haben K-Werte von 10 bis 300, vorzugsweise 20 bis 200. Die K-Werte werden bestimmt nach H. Fikentscher in 5 %iger wäßriger Kochsalzlösung bei pH 7, einer Temperatur von 25°C und einer Polymerkonzentration von 0,1 Gew.-%.

Die hydrolysierten Copolymerisate können gegebenenfalls 0 bis 50 Mol-% Acetateinheiten, 0 bis 99 Mol-% Alkoholeinheiten und/ oder 0 bis 99,9 Mol-% N-Vinylformamideinheiten enthalten.

Die Vinylamineinheiten enthaltenden Polymerisate (a) werden mit (b) Aldehyd- oder Ketogruppen aufweisenden Verbindungen umgesetzt. Als Komponente (b) sind alle Verbindungen geeignet, die mindestens eine der folgenden nach dem Stand der Technik für die Bildung von Aminalen bzw. Acetalen befähigten Carbonylfunktion aufweisen. Diese funktionellen Gruppen sind beispielsweise enthalten in Monoaldehyden, Dialdehyden, Hydroxyaldehyden, Alkoxyaldehyden, Ketoaldehyden, Aldehydcarbonsäuren, Aldehydcarbonsäureestern, Aldehydcarbonsäureamiden, Ketonen, Hydroxyketonen und/oder Alkoxyketonen.

Als Komponente (b) sind beispielsweise geeignet Monoaldehyde wie Formaldehyd, Acetaldehyd, Propionaldehyd, n-Butyraldehyd, i-Butyraldehyd, 2-Methylbutanal, 3-Methylbutanal, Pentanal, Hexanal und 2-Methylpentanal, ungesättigte Aldehyde wie Acrolein, Crotonaldehyd und Propargylaldehyd, Hydroxyaldehyde und Alkoxyaldehyde wie Hydroxyacetaldehyd, Methoxyacetaldehyd, 2-Hydroxypropionaldehyd, 3-Hydroxypropionaldehyd, 4-Hydroxybutanal, 5-Hydroxypentanal, Glycerinaldehyd und andere Hydroxyaldehyde und Alkoxyaldehyde, Ketoaldehyde wie Methylglyoxal und Aldehydcarbonsäuren und deren Ester wie Glyoxylsäure, 2-Formylpropionsäure, 2-Formylpropionsäuremethylester, 3-Formylpropionsäure, 3-Formylpropionsäuremethylester, 2-Formyl-2-methylpropionsäure, 2-Formyl-2-methylpropionsäuremethylester, 4-Oxobuttersäure und 4-Oxobuttersäuremethylester. Geeignete Dialdehyde sind beispielsweise Glyoxal, Malondialdehyd, Succindialdehyd, Glutardialdehyd, 3-Oxo-glutardialdehyd, Hexandial, Heptandial und Octandial. Außerdem eignen sich aromatische Aldehyde wie Benzaldehyd, 2-Methylbenzaldehyd, 4-Methylbenzaldehyd, 2-Methoxybenzaldehyd, 4-Methoxybenzaldehyd, 4-Ethoxybenzaldehyd, 4-Dimethylaminobenzaldehyd, 4-Diethylaminobenzaldehyd, Phthaldialdehyd und Terephthaldialdehyd.

In Frage kommen auch Kohlenhydrate wie z.B. Glucose, Mannose und Arabinose sowie Stärkehydrolysate.

Weitere geeignete Verbindungen (b) sind Ketone wie Aceton, Methylethylketon, Methylpropylketon, Diethylketon, Cyclopentanon und Cyclohexanon, Hydroxyketone und Alkoxyketone wie Hydroxyaceton und Methoxyketon, Diketone wie Acetylaceton und Acetonylaceton, araliphatische Ketone wie Acetophenon, 4-Hydroxyacetophenon, 2-Hydroxyacetophenon, 4-Hydroxypropiophenon und 2-Hydroxypropiophenon.

Als Komponente (b) sind weiter geeignet Acetale, Halbacetale, Aminale und Halbaminale der oben genannten Carbonylverbindungen und gegebenenfalls, wie im Falle des Hydroxyaldehyds, die dimere Form oder, wie im Falle des Formaldehyds die trimere Form und die entsprechenden Oligomeren bzw. Polymeren.

Als Komponente (c) sind Verbindungen geeignet, die von den Polymerisaten (a) verschieden sind und die mindestens eine der folgenden, nach dem Stand der Technik für die Bildung von Aminalen bzw. Acetalen befähigten Amino- oder Hydroxy-Gruppen aufweisen. NH-Gruppen aufweisende Verbindungen (c) sind Ammoniak, Amine, Etheramine, Aminoalkohole, Aminoetheralkohole, Carbonsäureamide, Carbonsäureimide, Harnstoff, Harnstoff-Derivate, NH-Gruppen aufweisende Heterocyclen und als OH-Gruppen aufweisende Verbindungen Alkohole, Etheralkohole und Polyalkylenglykole.

Als Komponente (c) sind beispielsweise geeignet Ammoniak, Monoalkylamine wie Methylamin, Ethylamin, Propyl-(1)-amin, Propyl(2)-amin, Butyl-(1)-amin, Butyl-(2)-amin, 2-Methyl-1-propanamin, tert.-Butylamin, 2-Methyl-2-propanamin, 3-Methyl-1-butanamin, n-Pentylamin, 3-Methyl-2-butanamin, n-Hexylamin, Cyclopropylamin, Cyclopentylamin, Cyclohexylamin, 1,5-Dimethylhexylamin, Benzylamin, 4-Methoxybenzylamin, N-Methylbenzylamin, 1-Phenylethylamin, 1-Methyl-3-phenylpropylamin, Dialkylamine wie Dimethylamin, N-Methylethylamin, Diethylamin, N-Methylpropylamin, N-Ethylpropylamin, N-Ethylisopropylamin, Dipropylamin, Diisopropylamin, Dibutylamin, Di-sek.-butylamin, Diisobutylamin, N-Methylbutylamin, N-Ethylbutylamin, Methylcyclohexylamin, Ethylcyclohexylamin, 2-Phenylethylamin, 2-Methyloxyphenylethylamin, 4-Methoxyphenylethylamin, 3,4-Dimethoxyphenylethylamin und andere substituierte Amine.

Weiterhin kommen in Frage Diamine wie 1,2-Diaminoethan, N-Methyl-1,2-diaminoethan, N,N-Dimethyl-1,2-diaminoethan, N,N'-Dimethyl-1,2-diaminoethan, N,N,N'-Trimethyl-1,2-diaminoethan, N-Ethyl-1,2-diaminoethan, N,N-Diethyl-1,2-diaminoethan, N,N'-Diethyl-1,2-diaminoethan, N,N-Dipropyl-1,2-ethanamin, N,N,N'-Triethyl-1,2-diaminoethan, N-Methyl-N-ethyl-1,2-diaminoethan, N-Methyl-N'-ethyl-1,2-diaminoethan, N,N-Dimethyl-N'-ethyl-1,2-diaminoethan, N,N'-Dimethyl-N-ethyl-1,2-diaminoethan, N--Propyl-1,2-diaminoethan, N,N-Dipropyl-1,2-diaminoethan, N,N'-Dipropyl-1,2-diaminoethan, N,N,N'-Tripropyl-1,2-diaminoethan, N-Isopropyl-1,2-diaminoethan, N,N-Diisopropyl-1,2-diaminoethan, N,N'-Diisopropyl-1,2-diaminoethan, N,N,N'-Triisopropyl-1,2-diaminoethan, N-Butyl-1,2-diaminoethan, N,N-Dibutyl-1,2-diaminoethan, N,N'-Dibutyl-1,2-diaminoethan, N,N,N'-Tributyl-1,2-diaminoethan, 1,3-Diaminopropan, N-Methyl-1,3-diaminopropan, N,N'-Dimethyl-1,3-diaminopropan, N,N-Dimethyl-1,3-diaminopropan, N,N-Diethyl-1,3-diaminopropan, N-Ethyl-1,3-diaminopropan, N-Isopropyl-1,3-diaminopropan, N-Propyl-1,3-diaminopropan, N-Butyl-1,3-diaminopropan, N-Cyclohexyl-1,3-diaminopropan, 1,2-Diaminopropan, N,N-Dimethyl-1,2-diaminopropan, 1,4-Diaminobutan, 1,2-Diaminobutan, 1,3-Diaminobutan, 1-Diethylamino-4-aminopentan, 1,5-Diaminopentan, Neopentandiamin, Dimethylneopentandiamin und 1,6-Diaminohexan, aromatische Mono- und Diamine wie Anilin und o-Phenylendiamin, Triamine wie Diethylentriamin, N-Methyl-diethylentriamin, N-Ethyl-diethylentriamin, N-Propyldiethylentriamin, N-Butyl-diethylentriamin, N'-Methyl-diethylentriamin, N'-Ethyl-diethylentriamin, N'-Propyl-diethylentriamin, N'-Butyl-diethylentriamin, N,N-Dimethyl-diethylentriamin, N-Methyl-N-ethyl-diethylentriamin, N-Methyl-N-propyl-diethylentriamin, N,N-Diethyl-diethylentriamin, N-Ethyl-N-propyl-diethylentriamin, N,N-Dipropyl-diethylentriamin, N,N-Dibutyl-diethylentriamin, N,N'-Dimethyldiethylentriamin, N-Methyl-N'-ethyldiethylentriamin, N-Ethyl-N'-methyl-diethylentriamin, N-Methyl-N'-propyl-diethylentriamin, N-Propyl-N'-methyl-diethylentriamin, N,N'-Diethyl-diethylentriamin, N,N'-Dipropyl-diethylentriamin, N,N'-Dibutyl-diethylentriamin, N,N"-Dimethyl-diethylentriamin, N-Methyl-N"-ethyl-diethylentriamin, N-Ethyl-N"-methyldiethylentriamin, N-Methyl-N"-propyl-diethylentriamin, N,N"-Diethyl-diethylentriamin, N,N"-Dipropyl-diethylentriamin, N,N"-Dibutyl-diethylentriamin, N,N,N'-Trimethyl-diethylentriamin, N,N-Dimethyl-N'-ethyl-diethylentriamin, N,N'-Dimethyl-N-ethyl-diethylentriamin, N,N,N'-Triethyl-diethylentriamin, N,N-Diethyl-N'-methyl-diethylentriamin, N,N-Dipropyl-N'-methyldiethylentriamin, N,N-Dibutyl-N'-methyl-diethylentriamin, N,N,N"-Triethyl-diethylentriamin, N,N-Dimethyl-N"-ethyldiethylentriamin, N,N'-Dimethyl-N"-ethyl-diethylentriamin, N,N,N"-Triethyl-diethylentriamin, N,N-Diethyl-N"-methyldiethylentriamin, N,N-Dipropyl-N"-methyl-diethylentriamin, N,N-Dibutyl-N"-methyl-diethylentriamin, N,N,N',N"-Tetramethyldiethylentriamin, N,N,N",N"-Tetramethyl-diethylentriamin, N,N,N',N" -Tetraethyl-diethylentriamin, N,N,N",N"-Tetraethyldiethylentriamin, N-(2-Aminoethyl)-1,3-diaminopropan, Dipropylentriamin, Hexamethylentriamin, N,N-Dimethyldipropylentriamin und andere Triamine, Tetramine wie N,N'-Bis-(aminopropyl)-ethylendiamin N,N'-Bis-(aminoethyl)-ethylendiamin, N,N'-Bis-(aminoethyl)-1,3-diaminopropan und Polyamine wie Polymerisate des Ethylenimins, die z.B. durch Polymerisation von Ethylenimin mit Alkylenhalogeniden oder Säuren als Katalysator herstellbar sind.

Außerdem eignen sich als Komponente (c) Rückstände aus Amindestillationen wie beispielsweise der Destillation von Diethylentriamin sowie von anderen oben genannten Aminen sowie Etheramine wie 2-Methoxyethylamin, 2-Ethoxyethylamin, 1-Methoxy-2-aminopropan, 3-Methoxy-propylamin, 2-Methoxy-1-aminopropan, 3-Ethoxypropylamin, Di-2-methoxyethylamin, 3-(2-Methoxyethoxy)-propylamin, 4,7-Dioxadecan-1,10-diamin, 4, 9-Dioxadecan-1,12-diamin, 4,11-Dioxatetradecan-1,14-diamin, 4,7,10-Trioxadecan-1,13-diamin und andere Etherdiamine, Aminoetheralkohole wie 2-(2-Aminoethoxy)-ethanol, 2-[2-(Dimethylamino)ethoxy]-ethanol, 2-[2-(Diethylamino)ethoxy]-ethanol, 3-(Diethylamino)-1,2-propandiol und andere Aminoetheralkohole, Aminoalkohole wie 2-Aminoethanol, 2-Methylamino-ethanol, 2-Dimethylamino-ethanol, 2-(Ethylamino)-ethanol, 2-Diethylamino-ethanol, Diisopropylethanolamin, 2-Amino-1-propanol, 1-Amino-2-propanol, 3-Amino-1-propanol, 3-(Dimethylamino)-1-propanol, 1-(Ethylamino) -2-propanol, 2-(2-Dimethylamino-ethoxy)-ethanol, Bis-(2-hydroxyethyl)-amin, Tris-(2-hydroxyethyl)-amin, Bis-(2-hydroxypropyl)-amin, Tris-(2-hydroxypropyl)-amin, 2-(Butylamino)-ethanol, 2-(Cyclohexylamino)-ethanol, 2-(Dibutylamino)-ethanol, tert.-Butylethanolamin, tert.-Butyldiethanolamin, Methyldiethanolamin, Butyldiethanolamin, Dimethylisopropanolamin, Methyldiisopropanolamin, N-(2-Hydroxyethyl)-1,2-diaminoethan, N,N-Bis-(2-hydroxyethyl)-1,2-diaminoethan, N,N'-Bis-(2-hydroxyethyl)-1,2-diaminoethan, N,N,N'-Tris-(2-hydroxyethyl)-1,2-diaminoethan, N,N,N',N'-Tetrakis-(2-hydroxyethyl)-1,2-diaminoethan, N-(2-Hydroxyethyl)-1,2-diaminopropan, N,N-Bis-(2-hydroxyethyl)-1,2-diaminopropan, N,N'-Bis-(2-hydroxyethyl)-1,2-diaminopropan, N,N,N'-Tris-(2-hydroxyethyl)-1,2-diaminopropan, N,N,N',N' -Tetrakis-(2-hydroxyethyl)-1,2-diaminopropan, N-(2-Hydroxyethyl)-1,3-diaminopropan, N,N-Bis-(2-hydroxyethyl)-1,3-diaminopropan, N,N'-Bis-(2-hydroxyethyl)-1,3-diaminopropan, N,N,N'-Tris-(2-hydroxyethyl)-1,3-diaminopropan, N,N,N',N'-Tetrakis-(2-hydroxyethyl)-1,3-diaminopropan, 3-Amino-2,2-dimethyl-1-propanol, 3-Dimethylamino-2,2-dimethyl-1-propanol, 3-(2-Hydroxyethylamino)-1-propanol, 2-Amino-1-butanol, 2-Dimethylamino-1-butanol und 2-[(Aminoethyl)amino]-ethanol.

Selbstverständlich kommen als Komponente (c) auch Mischungen der jeweils genannten Verbindungen einer Gruppe oder aus zwei oder mehreren unterschiedlichen Gruppen in Frage.

Weitere geeignete Verbindungen (c) sind Carbonsäureamide wie Formamid, Essigsäureamid, Propionsäureamid, Buttersäureamid, Pentansäureamid, Hexansäureamid und Benzoesäureamid, Mono- und Diamide von Dicarbonsäuren wie Oxalsäureamid, Malonsäureamid, Bernsteinsäureamid, Maleinsäureamid, Glutarsäureamid und Adipinsäureamid, Imide von Dicarbonsäuren wie Succinimid, Maleinsäureimid, Glutarsäureimid und Phthalsäureimid, Harnstoff und substituierte Harnstoffe wie N-Methylharnstoff, N,N-Dimethylharnstoff, N,N,N'-Trimethylharnstoff, Ethylenharnstoff, Propylenharnstoff, N-Methyl-ethylenharnstoff, N-Methyl-propylenharnstoff, N-Ethylethylenharnstoff, N-Ethyl-propylenharnstoff, N-Aminoethyl-ethylenharnstoff, N-Aminopropyl-ethylenharnstoff und N-Hydroxyethyl-ethylenharnstoff, N-haltige Heterocyclen wie Aziridin, Pyrrolidin, Pyrrol, Pyrazol, Imidazol, 1,2,3-Triazol, 1,2,4-Triazol, Oxazolan, Pyrrolidon, 2-Oxazolidon, Piperidin, Piperazin, Morpholin, 1,4-Thiazin, 2-Pyridon, 4-Pyridon, 2,5-Piperazindion, Caprolactam, Indol und Benzimidazol, Aminoalkyl- bzw. Hydroxyalkyl-Heterocyclen wie N-(2-Aminoethyl)-pyrrolidin, N-(3-Aminopropyl)-pyrrolidin, N-(2-Aminoethyl)-imidazol, N-(3-Aminopropyl)-imidazol, N-(2-Hydroxyethyl)-imidazol, N-(2-Hydroxyethyl)-pyrrolidon, Aminoethylpiperazin, N-Aminopropyl-piperazin, N-Aminoethyl-N'-methyl-piperazin, N-Aminopropyl-N'-methyl-piperazin Hydroxyethylpiperazin, Hydroxyethylmorpholin, Aminoethylmorpholin und andere Aminoalkyl- bzw. Hydroxyalkyl-Heterocyclen.

Geeignete OH-Gruppen enthaltende Verbindungen sind ein- und mehrwertige Alkohole wie Methanol, Ethanol, 1-Propanol, 1-Butanol, 2-Butanol, Pentanol, Hexanol, 3-Methyl-3-pentanol, Cyclohexanol, Benzylalkohol, 4-Methylbenzylalkohol und 2-(4-Methoxyphenyl)-ethanol, Etheralkohole wie 1-Butoxy-2-propanol und 1-Methoxy-2-butanol, Dialkohole wie 1,2-Dihydroxy-ethan, 1,2-Dihydroxypropan, 1,3-Dihydroxy-propan, 1,2-Butandiol, 1,3-Butandiol, 1,4-Butandiol und 2,3-Butandiol, Trialkohole wie Glycerin und 2-(Hydroxymethyl)-1,4-butandiol.

Zur Herstellung der erfindungsgemäß zu verwendenden Farbübertragungsinhibitoren können die Komponenten (a) und (b) in beliebiger Reihenfolge zusammengegeben bzw. zur Reaktion gebracht werden. So können zur Umsetzung der Komponenten (a) und (b) beispielsweise das Vinylamineinheiten enthaltende Polymerisat (a), bevorzugt in Form einer wäßrigen Lösung, vorgelegt werden und die Carbonylkomponente (b) gegebenenfalls als bevorzugt wäßrige Lösung unter Durchmischen bei geeigneter Reaktionstemperatur sukzessive hinzugegeben werden. Die Carbonylkomponente (b) kann entweder als solche oder in Form der entsprechenden Acetale, Halbacetale, Aminale oder Halbaminale oder gegebenenfalls in dimerer oder polymerer Form hinzugegeben werden.

Es kann auch in umgekehrter Reihenfolge verfahren werden, indem man Komponente (b), bevorzugt als wäßrige Lösung, vorlegt und dann eine Lösung der Komponente (a) hinzudosiert. Man kann aber auch eine Lösung der Komponenten (a) und (b) herstellen und sie unter Rühren auf die geeignete Reaktionstemperatur erwärmen. Auch zur Umsetzung aller drei Komponenten (a), (b) und (c) können diese in beliebiger Reihenfolge zusammengegeben bzw. zur Reaktion gebracht werden. So können beispielsweise zuerst die Komponenten (b) und (c), in einem zweiten Reaktionsschritt die Komponente (a) umgesetzt werden. Man kann auch wäßrige Lösungen der Komponenten (a) und (c) mischen und dann die Komponente (b) hinzudosieren oder auch in umgekehrter Reihenfolge. Die Umsetzungen werden bevorzugt in Wasser als Lösemittel durchgeführt. Es kommen aber auch andere, bevorzugt mit Wasser mischbare Lösemittel wie niedere Alkohole, (Poly-)Ether oder Etheralkohole oder Lösemittelgemische in Frage, die ein hinreichendes Lösevermögen gegenüber den einzelnen Komponenten besitzen. Lösemittelkomponenten mit Hydroxygruppen können selbstverständlich unter Aminal-Acetal-Bildung in das Reaktionsgeschehen eingreifen. Anstatt in Lösung können die Umsetzungen auch in Suspension erfolgen oder in einer Wasser-in-Öl-Emulsion unter Verwendung eines mit Wasser nicht mischbaren Lösemittels und ggf. eines geeigneten Emulgators durchgeführt werden. Geeignete Reaktionstemperaturen liegen z.B. zwischen 10°C und 120°C, bevorzugt zwischen 30°C und 80°C. Die Reaktionsdauer beträgt beispielsweise 10 Minuten bis 10 Stunden, bevorzugt 20 Minuten bis 5 Stunden.

Neben einer Fahrweise ohne Katalysatorzusatz ist auch die Verwendung von sauren Katalysatoren möglich. Geeignet sind Mineralsäuren wie Salzsäure, Schwefelsäure, Perchlorsäure, unterphosphorige Säure, phosphorige Säure und Phosphorsäure sowie organische Säuren wie Arylsulfonsäuren, Methansulfonsäure, Ameisensäure, Essigsäure oder Halogenessigsäuren. Die Säuren können als Katalysatoren in Konzentrationen von 0,005 Gew.-% bis 80 Gew.-%, bevorzugt 1 bis 5 Gew.-%, bezogen auf die Vinylamineinheiten enthaltende Komponente (a), zugesetzt werden. Nach beendeter Reaktion kann durch Zugabe von Basen, bevorzugt Alkalien, eine Neutralisation der Säure erfolgen. Die Reaktionsprodukte können entweder als Lösung, als Suspension oder nach Entfernen des Lösemittels, gegebenenfalls durch Abdestillieren im Vakuum, Sprühtrocknen oder Gefriertrocknen, in fester Form verwendet werden.

Polymerisate mit Aminal-, Halbaminal- und/oder Aminal-Acetal-Strukturen, die erhältlich sind durch Umsetzung von
(a) Vinylamineinheiten enthaltenden Polymerisaten mit
(b) Aldehyd- oder Ketogruppen aufweisenden Verbindungen und
(c) anderen NH-Gruppen aufweisenden Verbindungen
sind neue Stoffe. Bevorzugt sind solche Polymerisate, die erhältlich sind durch Umsetzung von
(a) Vinylamineinheiten enthaltenden Polymerisaten, die
   (1) 0,1 bis 100 Mol-% Vinylamineinheiten,
   (2) 99,9 bis 0 Mol-% Einheiten von Monomeren aus der Gruppe von offenkettigen N-Vinylcarbonsäureamiden, Vinylformiat, Vinylacetat, Vinylpropionat, C₁- bis C₆-Alkylvinylether, Vinylharnstoffen, Acrylsäure, Methacrylsäure, Maleinsäure sowie die Anhydride, Ester, Nitrile und Amide der genannten Carbonsäuren, N-Vinylpyrrolidon, N-Vinylimidazole, N-Vinylimidazoline und/oder Vinylalkoholeinheiten enthalten mit
(b) Aldehyden mit 1 bis 5 C-Atomen und
(c) Ammoniak, Ethanolamin, Ethylendiamin und/oder N-(3-Aminopropyl)-imidazol.

Die Vinylamineinheiten in den Polymerisaten (a) können zu 0,1 bis 100, vorzugsweise zu 1 bis 80 % mit den Verbindungen (b) und/oder (c) umgesetzt sein. Die erfindungsgemäß zu verwendenden Polymerisate enthalten mindestens eine der folgenden Strukturen, wenn man z.B. von einem vollständig hydrolysierten Polyvinylformamid als (a), Formaldehyd als (b) und Ammoniak als (c) ausgeht: 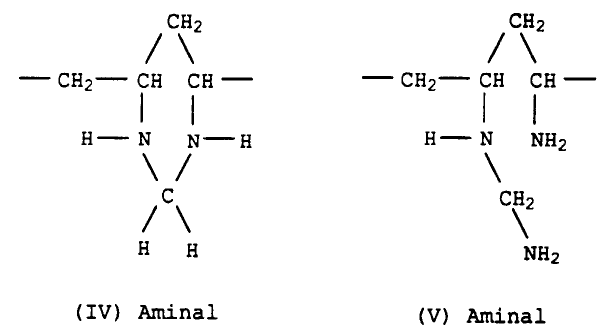 Wenn man die Komponente (c) bei der Herstellung fortläßt, erhält man z.B.

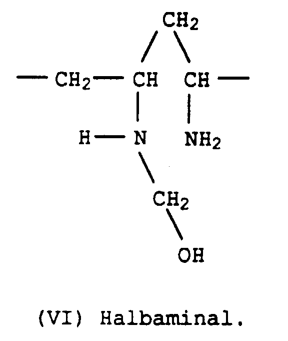

Halbaminalstrukturen entstehen auch, wenn man von einem Copolymerisat als (a) ausgeht, das Vinylamin- und Vinylalkoholeinheiten enthält, z.B.

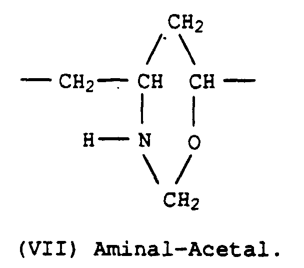

Führt man die vorstehend beschriebene Umsetzung in Gegenwart von z.B. Ammoniak durch, so kann folgende Aminal-Acetal-Struktur gebildet werden:

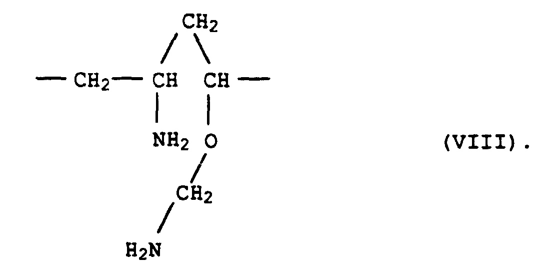

Die oben beschriebenen Aminal-, Halbaminal- und/oder gemischte Aminal-Acetal-Strukturen enthaltenden Polymerisate haben in 3 gew.-%iger wäßriger Lösung bei 25°C eine Viskosität von vorzugsweise 1 bis 2000 mPas. Sie werden als Zusatz zu Waschmitteln zur Inhibierung der Farbstoffübertragung während des Waschvorgangs verwendet. Die Waschmittel können pulverförmig sein oder auch in flüssiger Einstellung vorliegen. Die Zusammensetzung der Waschmittelformulierungen kann sehr unterschiedlich sein. Wasch- und Reinigungsmittel enthalten üblicherweise 2 bis 50 Gew.-% an Tensiden sowie gegebenenfalls Builder. Diese Angaben gelten sowohl für flüssige als auch für pulverförmige Waschmittel. Wasch- und Reinigungsformulierungen, die in Europa, in den USA und in Japan gebräuchlich sind, findet man beispielsweise in Chemical and Engn. News, Band 67, 35 (1989) tabellarisch dargestellt. Weitere Angaben über die Zusammensetzung von Wasch- und Reinigungsmitteln können der WO-A-90/13581 sowie Ullmann's Encyklopädie der technischen Chemie, Verlag Chemie, Weinheim 1983, 4, Auflage, Seiten 63 bis 160, entnommen werden. Die Waschmittel können gegebenenfalls noch Bleichmittel enthalten, z.B. Natriumperborat, das im Falle seines Einsatzes in Mengen bis zu 30 Gew.-% in der Waschmittelformulierung enthalten sein kann. Die Waschmittel können gegebenenfalls weitere übliche Zusätze enthalten wie Komplexbildner, Trübungsmittel, optische Aufheller, Enzyme, Parfümöle, andere Farbübertragungsinhibitoren, Vergrauungsinhibitoren und/oder Bleichaktivatoren. Waschmittel auf Basis von Tensiden und gegebenenfalls Buildern sowie anderen üblichen Bestandteilen enthalten die erfindungsgemäß zu verwendenden Polymerisate in Mengen von 0,05 bis 10, vorzugsweise 0,25 bis 5 Gew.-%.

Die erfindungsgemäßen Aminale, Halbaminale und/oder gemischte Aminale-Acetale enthaltenden Polymerisate wirken beim Waschen als Farbübertragungsinhibitor und verhindern so, daß beim gemeinsamen Waschen von gefärbten und weißen Textilien eine Anfärbung des weißen Textilguts stattfindet.

Ein weiterer Gegenstand der Erfindung sind daher Waschmittel auf der Basis von Tensiden und gegebenenfalls Buildern sowie anderen üblichen Bestandteilen, die 0,05 bis 10 Gew.-% an Polymerisaten enthalten, die durch Umsetzung von
(a) Vinylamineinheiten enthaltenden Polymerisaten mit
(b) Aldehyd- oder Ketogruppen aufweisenden Verbindungen und gegebenenfalls
(c) anderen NH-Gruppen und/oder OH-Gruppen aufweisenden Verbindungen
herstellbar sind und die Aminal-, Halbaminal- und/oder Aminal-Acetal-Strukturen sowie gegebenenfalls unumgesetzte Vinylamineinheiten enthalten.

Die K-Werte wurden nach H. Fikentscher, Cellulose-Chemie, Band 13, 58 bis 64 und 71 bis 74 (1932) in 5 gew.-%iger wäßriger Kochsalzlösung bei pH 7, 25°C und einer Polymerkonzentration von 0,1 Gew.-% bestimmt.

Die verwendeten Polyvinylamine wurden durch Hydrolyse von Polyvinylformamiden mit einem K-Wert von 31 erhalten. Die Viskositäten der erhaltenen Produkte wurden mit Hilfe eines Rotationsviskosimeters der Fa. Haake VT 500 unter Verwendung der Meßeinrichtung NV (DIN 54 453) bestimmt. Sofern nichts anderes angegeben, wurde bei einer Temperatur von 25°C mit einer konstanten Schergeschwindigkeit von 600 s⁻¹ gemessen. Die Angaben in Prozent bedeuten Gewichtsprozent.

### Herstellung der Polymerisate

### Beispiel 1

In einem Kolben, ausgestattet mit Rührer, Thermometer und Tropftrichter, wurden 62,5 g N-(3-Aminopropyl-imidazol vorgelegt. Nach Erwärmen auf 50°C wurden 49,3 g 36,5 %iger wäßriger Formaldehyd-Lösung innerhalb von 2 Stunden hinzugetropft und anschließend 45 Minuten bei 50°C nachgerührt.

Nun wurden 71,8 g wäßrige Polyvinylamin-Lösung (Aminzahl: 6,96 mMol/g) innerhalb von 1,5 Stunden hinzugetropft. Unterdessen wurde das Reaktionsgemisch mit ca. 120 ml Wasser verdünnt. Anschließend wurde 3 Stunden bei 50°C nachgerührt. Man erhielt eine schwach trübe Lösung.

### Beispiel 2

In einem Kolben, ausgestattet mit Rührer, Thermometer und Tropftrichter, wurde eine Lösung von 13,1 g N-(3-Aminopropyl)-imidazol in 50 ml vollentsalztem Wasser vorgelegt. 8,6 g einer 36,5 %igen wäßrigen Formaldehyd-Lösung wurden unter Erwärmung auf 40°C hinzugetropft.

Diese Reaktionslösung wurde ihrerseits bei 40°C innerhalb von 2 Stunden zu 15 g einer wäßrigen Polyvinylamin-Lösung (Aminzahl: 6,96 mMol/g) hinzugetropft. Anschließend wurde 1 Stunde nachgerührt. Erhalten wurde eine klare Lösung mit einer Viskosität von 1,2 mPas.

### Beispiel 3

In einem Kolben, ausgestattet mit Rührer, Thermometer und Tropftrichter, wurden 58 g einer 5 %igen wäßrigen Formaldehyd-Lösung vorgelegt. 20 g einer wäßrigen Polyvinylamin-Lösung (Aminzahl: 6,96 mMol/g) wurden nach Verdünnen mit 50 ml Wasser bei maximal 40°C hinzugetropft. Zunächst wurde bei 40°C 1 Stunde nachgerührt, dann 1 Stunde bei maximal 80°C. Man erhielt eine klare Lösung.

### Beispiel 4

In einem Kolben, ausgestattet mit Rührer, Thermometer und Tropftrichter, wurde eine Lösung von 5 g n-Butyraldehyd und 1 g p-TSS in 10 g MeOH vorgelegt. 20 g einer wäßrigen Polyvinylamin-Lösung (Aminzahl: 6,96 mMol/g) wurden nach Verdünnen mit 80 ml Wasser bei Raumtemperatur hinzugetropft. Nach Erwärmen auf 65°C wurde 1,5 Stunden gerührt. Die abgekühlte Lösung wurde mit Natronlauge auf pH - 10,5 eingestellt und 1 Stunde nachgerührt. Die unter Vakuum zunächst um ca. 50 % eingeengte Lösung wurde mit Wasser wieder auf ihr Ausgangsvolumen aufgefüllt. Erhalten wurde eine trübe Lösung mit einer Viskosität von 4,8 mPas.

### Beispiel 5

In einem Kolben, ausgestattet mit Rührer, Thermometer und Tropftrichter, wurde eine Lösung von 5 g n-Butyraldehyd in 10 g MeOH vorgelegt. 20 g einer wäßrigen Polyvinylamin-Lösung (Aminzahl: 6,96 mMol/g) wurden nach Verdünnen mit 80 ml Wasser bei Raumtemperatur hinzugetropft. Nach Erwärmen auf 65°C wurde 1,5 Stunden gerührt. Die unter Vakuum zunächst um ca. 50 % eingeengte Lösung wurde mit Wasser wieder auf ihr Ausgangsvolumen aufgefüllt. Erhalten wurde eine klare Lösung mit einer Viskosität von 5,7 mPas.

### Beispiel 6

In einem Kolben, ausgestattet mit Rührer, Thermometer und Tropftrichter, wurden 61,8 g einer 7 %igen wäßrigen Formaldehyd-Lösung und 0,1 g p-TSS vorgelegt. 20 g einer wäßrigen Polyvinylamin-Lösung (Aminzahl: 6,96 mMol/g) wurden nach Verdünnen mit 50 ml Wasser bei maximal 40°C hinzugetropft. Bei 40°C wurde 1 Stunde nachgerührt. Man erhielt eine trübe Lösung mit einer Viskosität von 2,9 mPas.

### Beispiel 7

In einem Kolben, ausgestattet mit Rührer, Thermometer und Tropftrichter, wurden 20,0 g einer wäßrigen Polyvinylamin-Lösung (Aminzahl: 6,96 mMol/g) vorgelegt. 5,7 g einer 36,5 %igen wäßrigen Formaldehyd-Lösung wurden bei Raumtemperatur hinzugetropft und bei 40°C 15 Minuten nachgerührt. Nach Verdünnen mit 50 ml Wasser wurden 54,2 g einer 7,7 %igen wäßrigen Ethanolamin-Lösung hinzugetropft und 1,5 Stunden bei 40°C nachgerührt. Man erhielt eine klare Lösung, deren pH-Wert durch Zugabe von Essigsäure auf 8 eingestellt wurde. Viskosität: 5,1 mPas.

### Beispiel 8

In einem Kolben, ausgestattet mit Rührer, Thermometer und Tropftrichter, wurden 20,0 g einer wäßrigen Polyvinylamin-Lösung (Aminzahl: 6,96 mMol/g), 9 g N-Aminoethyl-ethylenharnstoff und 0,1 g p-TSS vorgelegt und mit 100 ml vollentsalztem Wasser verdünnt. Bei 40°C wurden 11,4 g einer 36,5 %igen wäßrigen Formaldehyd-Lösung dosiert und 1,5 Stunden nachgerührt. Man erhielt eine trübe Lösung.

### Beispiel 9

In einem Kolben, ausgestattet mit Rührer, Thermometer und Tropftrichter, wurden 20,0 g einer wäßrigen Polyvinylamin-Lösung (Aminzahl: 6,96 mMol/g), 4,8 g 25 %ige wäßrige Ammoniak-Lösung und 0,1 g p-TSS vorgelegt und mit 100 ml vollentsalztem Wasser verdünnt. Bei 40°C wurden 11,4 g einer 36,5 %igen wäßrigen Formaldehyd-Lösung dosiert und 1,5 Stunden nachgerührt. Man erhielt eine trübe Lösung mit einer Viskosität von 9,1 mPas.

### Beispiel 10

In einem Kolben, ausgestattet mit Rührer, Thermometer und Tropftrichter, wurden 20,0 g einer wäßrigen Polyvinylamin-Lösung (Aminzahl: 6,96 mMol/g), 4,2 g Ethylendiamin und 0,1 g p-TSS vorgelegt und mit 100 ml vollentsalztem Wasser verdünnt. Bei 40°C wurden 11,4 g einer 36,5 %igen wäßrigen Formaldehyd-Lösung dosiert und 1,5 Stunden nachgerührt. Man erhielt eine trübe Lösung.

### Beispiel 11

In einem Kolben, ausgestattet mit Rührer, Thermometer und Tropftrichter, wurden 20,0 g einer wäßrigen Polyvinylamin-Lösung (Aminzahl: 6,96 mMol/g) und 0,1 g p-TSS vorgelegt und mit 200 ml vollentsalztem Wasser verdünnt. 10,1 g einer 40 %igen wäßrigen Glyoxal-Lösung wurden bei Raumtemperatur hinzudosiert und zunächst 1,5 Stunden bei 40°C anschließend 1 Stunde bei 60°C nachgerührt. Erhalten wurde eine trübe Lösung mit einer Viskosität von 4,7 mPas, gemessen bei einer Schergeschwindigkeit von 59,5 s⁻¹.

### Beispiel 12

In einem Kolben, ausgestattet mit Rührer, Thermometer und Tropftrichter, wurden 20,0 g einer wäßrigen Polyvinylamin-Hydrochlorid-Lösung (Aminzahl: 3,28 mMol/g) vorgelegt und mit 30 %iger wäßrige Kalilauge auf pH 5 eingestellt. Bei 40°C wurden 5,4 g einer 36,5 %igen wäßrigen Formaldehyd-Lösung dosiert und 1,5 Stunden nachgerührt. Anschließend wurde durch Zugabe von 30 %iger Kalilauge ein pH von 9 eingestellt. Erhalten wurde eine klare Lösung mit einer Viskosität von 2,9 mPas.

### Beispiel 13

In einem Kolben, ausgestattet mit Rührer, Thermometer und Tropftrichter, wurden 60,3 g einer 6,2 %igen Formaldehyd-Lösung vorgelegt. 20 g einer wäßrigen Polyvinylamin-Lösung (Aminzahl: 6,96 mMol/g) wurden nach Verdünnen mit 50 ml Wasser bei maximal 40°C hinzugetropft. Zunächst wurden bei 40°C 1 Stunde nachgerührt, dann 1 Stunde bei maximal 80°C. Erhalten wurde eine schwach trübe Lösung mit einer Viskosität von 1,6 mPas.

### Anwendungstechnische Beispiele

### Waschversuche

Zur Prüfung der Wirksamkeit wurde weißes Baumwoll-Prüfgewebe (Masse: 2,50 g) gemeinsam mit eingefärbten Textilproben aus Baumwolle im Launder-O-meter gewaschen. Die Messung der Anfärbung erfolgte photometrisch. Aus den an den einzelnen Prüfgeweben gemessenen Remissionswerten wurden die jeweiligen Farbstärken bestimmt, aus denen sich die Wirksamkeit der geprüften Polymere ableiten lassen. Eine Wirksamkeit von 100 % bedeutet, daß das Prüfgewebe seine ursprüngliche Farbstärke beibehielt, es also nicht angefärbt wurde.

Eine Wirksamkeit von 0 % wird bei einem Prüfgewebe ermittelt, das ohne Zusatz eines farbstoffübertragungsverhindernden Additivs gewaschen wurde.

Die bei der Wäsche verwendeten Baumwollstücke waren so eingefärbt, daß ein 5 g-Lappen beim weißen Testmaterial etwa eine Anschmutzung der Farbstärke 100 bei den Direktfarbstoffen und eine Farbstärke von 30 bis 40 bei den Reaktivfarbstoffen bewirkte. Bei diesen Farbstärken läßt sich die Wirkung der Additive am besten beurteilen.

**Tabelle 1**

| Färbung mit | Constitution number |
|---|---|
| 0,3 % C.I. Direkt Rot 81 | 28160 |
| 1,0 % C.I. Direkt Orange 39 | 40215 |
| 3,0 % C.I. Direkt Schwarz 22 | 35435 |
| 3,0 % C.I. Direkt Blau 218 | 24401 |
| 8,0 % C.I. Reaktiv Schwarz 5 | 20505 |
| 4,0 % C.I. Reaktiv Rot 158 | --- |

Waschbedingungen:

| Waschgerät | Launder-O-meter (Fa. Atlas, Chikago, Illinois) |
|---|---|
| Waschcyclen | 1 |
| Temperatur | 60°C |
| Waschdauer | 30 min |
| Wasserhärte | 3 mmol/l; Ca^{2+ :} Mg²⁺ : HCO₃ (4:1:8) |
| Prüfgewebe | Baumwolle |
| Flottenmenge | 250 ml |
| Waschmittelkonzentration | 5,0 g/l |
| Waschmittelzusammensetzung | [%] |

| | |
|---|---|
| Zeolith | 27,50 |
| Natriumcarbonat | 15,00 |
| Dodecylbenzolsulfonat | 7,00 |
| Seife | 1,75 |
| C₁₃/₁₅-Oxoalkohol x 7 Ethylenoxid-Einheiten | 5,40 |
| Arylsäure/Maleinsäure - Copolymerisat, 70/30, | 3,75 |
| Na-Salz, Molmasse | 70000 |
| Na-Carboxymethylcellulose | 0,60 |
| Wasser | 9,85 |
| Farbübertragungsinhibitor gemäß Tabelle 2 | 1,00 |
| Natriumsulfat | auf 100 |

### Vergleichsbeispiel

Polyvinylpyrrolidon, K-Wert 30 (1 %ig in Wasser) wurde als Standardpolymer zum Vergleich in der oben beschriebenen Waschmittelzusammensetzung getestet. Polymere dieser Art sind als Farbübertragungsinhibitoren in handelsüblichen Waschmitteln enthalten.

**Tabelle 2**

| Beispiel | Farbübertragungsinhibitor gemäß Beispiel | Direkt Rot 81 | Direkt Orange 391 | Direkt Schwarz 22 | Direkt Blau 218 | Reaktiv Schwarz 5 | Reaktiv Rot 159 |
|---|---|---|---|---|---|---|---|
| 14 | 1 | 13 | 36 | 78 | 55 | 21 | 32 |
| 15 | 2 | 18 | 39 | 77 | 56 | 26 | 38 |
| 16 | 3 | 11 | 21 | 71 | 79 | 21 | 33 |
| 17 | 4 | 34 | 74 | 79 | 95 | 25 | 53 |
| 18 | 5 | 27 | 71 | 78 | 96 | 21 | 50 |
| 19 | 6 | 11 | 19 | 73 | 36 | 20 | 31 |
| 20 | 7 | 5 | 0 | 48 | 82 | 24 | 33 |
| 21 | 8 | 15 | 19 | 77 | 31 | 22 | 32 |
| 22 | 9 | 11 | 26 | 83 | 71 | 24 | 44 |
| 23 | 10 | 4 | 17 | 76 | 58 | 19 | 39 |
| 24 | 11 | 6 | 11 | 73 | 79 | 38 | 28 |
| 25 | 12 | 2 | 0 | 67 | 81 | 29 | 44 |
| 26 | 13 | 13 | 41 | 87 | 89 | 36 | 47 |
| | Vgl.Bsp. | 0 | 14 | 57 | 26 | 16 | 32 |

Die Ergebnisse zeigen, daß die erfindungsgemäß zu verwendenden Produkte der Beispiele 1 bis 13 die Wirksamkeit von Polyvinylpyrrolidon in ca. 90 % der Fälle erreichen und zum Teil sehr deutlich übertreffen.

## Patentansprüche

1. Verwendung von Polymerisaten, die durch Umsetzung von
(a) Vinylamineinheiten enthaltenden Polymerisaten mit
(b) Aldehyd- oder Ketogruppen aufweisenden Verbindungen und gegebenenfalls
(c) anderen NH-Gruppen und/oder OH-Gruppen aufweisenden Verbindungen
herstellbar sind und die Aminal-, Halbaminal- und/oder Aminal-Acetal-Strukturen sowie gegebenenfalls unumgesetzte Vinylamineinheiten enthalten, als Zusatz zu Waschmitteln zur Inhibierung der Farbstoffübertragung während des Waschvorgangs.

2. Verwendung nach Anspruch 1, dadurch gekennzeichnet, daß die Vinylamineinheiten enthaltenden Polymerisate (a)
(1) 0,1 bis 100 Mol-% Vinylamineinheiten und
(2) 99,9 bis 0 Mol-% Einheiten von anderen monoethylenisch ungesättigten Monomeren und
(3) 0 bis 5 Mol-% Einheiten von Monomeren mit mindestens zwei ethylenisch ungesättigten nicht konjugierten Doppelbindungen enthalten.

3. Verwendung nach Anspruch 1 oder 2, dadurch gekennzeichnet, daß die Vinylamineinheiten enthaltenden Polymerisate (a)
(1) 1 bis 99 Mol-% Vinylamineinheiten und
(2) 99 bis 1 Mol-% Einheiten von Monomeren aus der Gruppe von offenkettigen N-Vinylcarbonsäureamiden, Vinylacetat, Vinylpropionat, C₁- bis C₆-Alkylvinylether, Vinylharnstoffen, Acrylsäure, Methacrylsäure, Maleinsäure sowie die Anhydride, Ester, Nitrile und Amide der genannten Carbonsäuren, N-Vinylpyrrolidon, N-Vinylimidazole, N-Vinylimidazoline und/oder Vinylalkoholeinheiten enthalten.

4. Verwendung nach Anspruch 1, dadurch gekennzeichnet, daß die Vinylamineinheiten enthaltenden Polymerisate (a)
(1) 0,1 bis 100 Mol-% Vinylamineinheiten und
(2) 99,9 bis 0 Mol-% N-Vinylformamid-, Vinylacetat- und/oder Vinylalkoholeinheiten enthalten.

5. Verwendung nach einem der Ansprüche 1 bis 4, dadurch gekennzeichnet, daß als Aldehyd- oder Ketogruppen aufweisende Verbindungen (b) Monoaldehyde, Dialdehyde, Hydroxyaldehyde, Alkoxyaldehyde, Ketoaldehyde, Aldehydcarbonsäuren, Aldehydcarbonsäureester, Aldehydcarbonsäureamide, Ketone, Hydroxyketone und/oder Alkoxyketone eingesetzt werden.

6. Verwendung nach einem der Ansprüche 1 bis 5, dadurch gekennzeichnet, daß als NH-Gruppen aufweisende Verbindungen (c) Ammoniak, Amine, Etheramine, Aminoalkohole, Aminoetheralkohole, Carbonsäureamide, Carbonsäureimide, Harnstoff, Harnstoffderivate und NH-Gruppen aufweisende Heterocyclen und als OH-Gruppen aufweisende Verbindungen Alkohole, Etheralkohole und Polyalkylenglykole einsetzt.

7. Aminal- Halbaminal- und/oder Aminal-Acetal-Strukturen enthaltende Polymerisate, dadurch gekennzeichnet, daß sie erhältlich sind durch Umsetzung von
(a) Vinylamineinheiten enthaltenden Polymerisaten mit
(b) Aldehyd- oder Ketogruppen aufweisenden Verbindungen und
(c) anderen NH-Gruppen aufweisenden Verbindungen.

8. Aminal-, Halbaminal- und/oder Aminal-Acetal-Strukturen enthaltende Polymerisate nach Anspruch 7, dadurch gekennzeichnet, daß sie erhältlich sind durch Umsetzung von
(a) Vinylamineinheiten enthaltenden Polymerisaten, die
(1) 0,1 bis 100 Mol-% Vinylamineinheiten,
(2) 99,9 bis 0 Mol-% Einheiten von Monomeren aus der Gruppe von offenkettigen N-Vinylcarbonsäureamiden, Vinylacetat, Vinylpropionat, C₁- bis C₆-Alkylvinylether, Vinylharnstoffen, Acrylsäure, Methacrylsäure, Maleinsäure sowie die Anhydride, Ester, Nitrile und Amide der genannten Carbonsäuren, N-Vinylpyrrolidon, N-Vinylimidazole, N-Vinylimidazoline und/oder Vinylalkoholeinheiten enthalten mit
(b) Aldehyden mit 1 bis 5 C-Atomen und
(c) Ammoniak, Ethanolamin, Ethylendiamin und/oder N-(3-Aminopropyl)-imidazol.

9. Waschmittel auf der Basis von Tensiden und gegebenenfalls Buildern sowie anderen üblichen Bestandteilen, dadurch gekennzeichnet, daß sie 0,05 bis 10 Gew.-% an Polymerisaten enthalten, die durch Umsetzung von
(a) Vinylamineinheiten enthaltenden Polymerisaten mit
(b) Aldehyd- oder Ketogruppen aufweisenden Verbindungen und gegebenenfalls
(c) anderen NH-Gruppen und/oder OH-Gruppen aufweisenden Verbindungen herstellbar sind und die Aminal-, Halbaminal- und/oder Aminal- Acetal-Strukturen sowie gegebenenfalls unumgesetzte Vinylamineinheiten enthalten.

## Claims

1. The use of polymers which are preparable by reaction of
(a) polymers which contain vinylamine units, with
(b) compounds which contain aldehyde or keto groups, and optionally
(c) other NH- and/or OH-containing compounds
and which contain aminal, hemiaminal and/or aminal-acetal structures with or without unconverted vinylamine units, as laundry detergent additive for inhibiting dye transfer during the wash.

2. A use as claimed in claim 1, characterized in that the polymers (a) contain
(1) from 0.1 to 100 mol% of vinylamine units and
(2) from 99.9 to 0 mol% of units of other monoethylenically unsaturated monomers and
(3) from 0 to 5 mol% of units of monomers having at least two ethylenically unsaturated nonconjugated double bonds.

3. A use as claimed in claim 1 or 2, characterized in that the polymers (a) contain
(1) from 1 to 99 mol% of vinylamine units and
(2) from 99 to 1 mol% of units of monomers selected from the group consisting of open-chain N-vinylcarboxamides, vinyl acetate, vinyl propionate, C₁-C₆-alkyl vinyl ethers, vinylureas, acrylic acid, methacrylic acid, maleic acid and the anhydrides, esters, nitriles and amides of said carboxylic acids, N-vinylpyrrolidone, N-vinylimidazoles, N-vinylimidazolines and/or vinyl alcohol units.

4. A use as claimed in claim 1, characterized in that the polymers (a) contain
(1) from 0.1 to 100 mol% of vinylamine units and
(2) from 99.9 to 0 mol% of N-vinylformamide, vinyl acetate and/or vinyl alcohol units.

5. A use as claimed in any of claims 1 to 4, characterized in that the compounds (b) used are monoaldehydes, dialdehydes, hydroxyaldehydes, alkoxyaldehydes, ketoaldehydes, aldehydecarboxylic acids, aldehydecarboxylic esters, aldehydecarboxamides, ketones, hydroxyketones and/or alkoxyketones.

6. A use as claimed in any of claims 1 to 5, characterized in that NH-containing compounds (c) are selected from ammonia, amines, etheramines, aminoalcohols, aminoether alcohols, carbox-amides, carboximides, urea, urea derivatives and NH-containing heterocycles and OH-containing compounds from alcohols, ether alcohols and polyalkylene glycols.

7. Polymers containing aminal, hemiaminal and/or aminal-acetal structures, characterized in that they are obtainable by reaction of
(a) polymers which contain vinylamine units, with
(b) compounds which contain aldehyde or keto groups, and
(c) other NH- containing compounds.

8. Polymers as claimed in claim 7, characterized in that they are obtainable by reaction of
(a) polymers which contain
(1) from 0.1 to 100 mol% of vinylamine units,
(2) from 99.9 to 0 mol% of units of monomers selected from the group consisting of open-chain N-vinylcarboxamides, vinyl acetate, vinyl propionate, C₁-C₆-alkyl vinyl ethers, vinylureas, acrylic acid, methacrylic acid, maleic acid and the anhydrides, esters, nitriles and amides of said carboxylic acids, N-vinylpyrrolidone, N-vinylimidazoles, N-vinylimidazolines and/or vinyl alcohol units, with
(b) aldehydes having from 1 to 5 carbon atoms and
(c) ammonia, ethanolamine, ethylenediamine and/or N-(3-aminopropyl)imidazole.

9. Laundry detergents based on surfactants with or without builders and other customary constituents, characterized in that they contain from 0.05 to 10% by weight of polymers which are preparable by reaction of
(a) polymers which contain vinylamine units, with
(b) compounds which contain aldehyde or keto groups, and optionally
(c) other NH- and/or OH-containing compounds and which contain aminal, hemiaminal and/or aminal-acetal structures with or without unconverted vinylamine units.

## Revendications

1. Utilisation de polymères, qu'on peut obtenir par réaction
(a) de polymères contenant des motifs vinylamine avec
(b) des composés présentant des groupements aldéhyde ou cétone et éventuellement
(c) d'autres composés présentant des groupements NH et/ou OH et qui contiennent des structures aminal, hémiaminal et/ou aminal-acétal ainsi que d'éventuels motifs vinylamine n'ayant pas réagi, en tant qu'additifs pour détergents pour l'inhibition du transfert de colorants pendant le cycle de lavage.

2. Utilisation selon la revendication 1, caractérisée en ce que les polymères contenant des motifs vinylamine (a) contiennent
(1)0,1 à 100% en moles de motifs vinylamine et
(2) 99,9 à 0% en moles de motifs d'autres monomères à insaturation monoéthylénique et
(3) 0 à 5% en moles de motifs de monomères ayant au moins deux doubles liaisons non conjuguées à insaturation éthylénique.

3. Utilisation selon la revendication 1 ou 2, caractérisée en ce que les polymères contenant des motifs vinylamine (a) contiennent
(1) 1 à 99% en moles de motifs vinylamine et
(2) 99 à 1% en moles de motifs de monomères choisis dans le groupe constitué par les N-vinylcarboxamides à chaîne ouverte, l'acétate de vinyle, le propionate de vinyle, les éthers de vinyle et d'alkyle en C₁-C₆, les vinylurées, l'acide acrylique, l'acide méthacrylique, l'acide maléique ainsi que les anhydrides, les esters, les nitriles et les amides des acides carboxyliques cités, la N-vinylpyrrolidone, les N-vinylimidazoles, les N-vinylimidazolines et/ou des motifs vinylalcool.

4. Utilisation selon la revendication 1, caractérisée en ce que les polymères contenant des motifs vinylamine (a) contiennent
(1)0,1 à 100% en moles de motifs vinylamine
et
(2) 99,9% à 0% en moles de motifs N-vinylformamide, acétate de vinyle et/ou vinylalcool.

5. Utilisation selon l'une quelconque des revendications 1 à 4, caractérisée en ce que l'on utilise en tant que composés (b) contenant des groupements aldéhyde ou cétone, des monoaldéhydes, des dialdéhydes, des hydroxyaldéhydes, des alcoxyaldéhydes, des cétoaldéhydes, des acides aldéhydocarboxyliques, des esters aldéhydocarboxyliques, des amides aldéhydocarboxyliques, des cétones, des hydroxycétones et/ou des alcoxycétones.

6. Utilisation selon l'une quelconque des revendications 1 à 5, caractérisée en ce que l'on utilise, en tant que composés (c) contenant des groupements NH, de l'ammoniac, des amines, des étheramines, des aminoalcools, des aminoétheralcools, des carboxamides, des carboximides, de l'urée, des dérivés de l'urée et des hétérocylcles comportant des groupements NH, et on utilise en tant que composés contenant des groupements OH, des alcools, des étheralcools et des polyalkylèneglycols.

7. Polymères contenant des structures aminal, hémiaminal et/ou aminal-acétal, caractérisés en ce qu'on peut les obtenir par réaction
(a) de polymères contenant des motifs vinylamine avec
(b) des composés contenant des groupements aldéhyde ou cétone et
(c) d'autres composés contenant des groupements NH.

8. Polymères contenant des structures aminal, hémiaminal et/ou aminal-acétal selon la revendication 7, caractérisés en ce qu'on peut les obtenir par réaction
(a) de polymères contenant des motifs vinylamine qui contiennent
(1) 0,1 à 100% en moles de motifs vinylamine,
(2) 99,9 à 0% en moles de motifs de monomères choisis dans le groupe constitué par les N-vinylcarboxamides à chaîne ouverte, l'acétate de vinyle, le propionate de vinyle, les éthers de vinyle et d'alkyle en C₁-C₆, les vinylurées, l'acide acrylique, l'acide méthacrylique, l'acide maléique ainsi que les anhydrides, les esters, les nitriles et les amides des acides carboxyliques cités, la N-vinylpyrrolidone, les N-vinylimidazoles, les N-vinylimidazolines et/ou des motifs vinylalcool avec
(b) des aldéhydes à 1-5 atomes de carbone et
(c) de l'ammoniac, de l'éthanolamine, de l'éthylènediamine et/ou du N-(3-aminopropyl)imidazole.

9. Détergents à base de tensio-actifs et éventuellement d'adjuvants de lavage ainsi que d'autres ingrédients classiques, caractérisés en ce qu'ils contiennent 0,05 à 10% en poids de polymères qu'on peut obtenir par réaction
(a) de polymères contenant des motifs vinylamine avec
(b) des composés contenant des groupements aldéhyde ou cétone et éventuellement
(c) d'autres composés contenant des groupements NH et/ou OH, et qui contiennent des structures aminal, hémiaminal et/ou aminal-acétal ainsi que d'éventuels motifs vinylamine n'ayant pas réagi.
